Europäisches Patentamt

European Patent Office

Office européen des brevets

(11) Publication number: **0 420 520 A1**

## EUROPEAN PATENT APPLICATION

(21) Application number: 90310356.2

(51) Int. Cl.5: **A01N 25/02**, A01N 25/06

(22) Date of filing: 21.09.90

(30) Priority: 22.09.89 GB 8921515

(43) Date of publication of application:
03.04.91 Bulletin 91/14

(84) Designated Contracting States:
AT BE CH DE DK ES FR GB GR IT LI LU NL SE

(71) Applicant: THE WELLCOME FOUNDATION LIMITED
Unicorn House 160 Euston Road
London NW1 2BP(GB)

(72) Inventor: Mooney, Mary
The Wellcome Foundation Limited, Ravens Lane
Berkhamsted, Hertfordshire, HP4 2DY(GB)

(74) Representative: Rollins, Anthony John et al
Group Patents & Agreements The Wellcome
Research Laboratories Langley Court
Beckenham Kent BR3 3BS(GB)

(54) Pesticidal compositions.

(57) Pesticidal compositions eg. concentrates, aerosols and baits comprising a knockdown pesticide in an organic solvent carrier which includes ethyl toluene or trimethylbenzene have enhanced knockdown activity.

## PESTICIDAL COMPOSITIONS

The present invention relates to improved pesticidal compositions, their preparation, and their use in the control of insect and other arthropod pests. In particular, the present invention relates to potentiated pesticidal compositions comprising one or more pesticides and one or more solvents which potentiate the pest 'knockdown' activity of said pesticides. By the term 'knockdown' pesticides, is meant pesticides which cause rapid incapacitation and/or paralysis in pests exposed to them such that the pests appear to have been literally knocked down.

The knockdown phenomenon is most spectacular in the case of flying insects as it results in them falling from the air. In crawling insects knockdown is manifested as the condition of dorsal decubitus -a dormant or inert state. In each case, death itself usually occurs at some stage after the initial knockdown, depending on the type of insecticide used.

Knockdown has, not surprisingly, considerable appeal to the insecticide user and there is a tendency for it to be equated with efficacy of the insecticide product. For insecticides which have applications in the public health and more particularly in domestic situations, it is considered an important prerequisite for an insecticidal composition to cause rapid knockdown. In general, larger amounts of insecticides are required to effect knockdown in a given composition for insecticides which have knockdown characteristics, than is needed ultimately to kill the insect. Unfortunately, this increased insecticide concentration inevitably results in a greater cost to the consumer. There is also growing pressure to reduce the amount of insecticides released in the environment.

Therefore, there is an increasing need to improve the knockdown properties of pesticides and pesticidal composition to promote a more economical use of pesticides. Approaches to this problem in the past have concentrated on the development of new pesticides or on the use of synergists or combinations of pesticides.

The important target pests for knockdown pesticides include a wide range of industrial, domestic and public health pest such as flies (e.g. houseflies, blowflies, cluster flies, bot flies, warble flies, tsetse flies, blackflies), mosquitoes, midges, moths, wasps, hornets, ants, cockroaches, beetles, bedbugs, assassin bugs, earwigs, crickets, mites, ticks and fleas.

Knockdown pesticides with applications for use in the domestic or public health areas are conveniently used as a solution in an appropriate solvent which is often administered in the form of a spray or aerosol.

British Patent Specification 1 568 282 describes organophosphorus containing liquid insecticidal compositions comprising at least two solvents for the insecticide; one defined as 'low volatility' which is a poor solvent for the insecticides, plus a second solvent of 'high volatility' which is a good solvent for the insecticides.

Some of the organic solvents used in the art have been reported to increase the activity and/or efficacy of the insecticide in the formulation. For example the following miscellaneous organic solvents and organic solvent mixtures have been reported in the literature to increase the killing activity of insecticides; machine oil, lamp oil, dimethylformamide, azoxybenzene, kerosene and various paraffins.

Us Patent 4,595,679 describes insecticidal compositions utilising 2-pyrollidones (i.e. N-vinyl 2-pyrollidone, N-methyl 2-pyrollidone and 2-pyrollidone) as solvents for synergised pyrethrins which have enhanced insect knockdown characteristics. It was suggested in the patent that the accelerated knockdown was the result of improved penetration of the insecticide into the body of the insect. However, the routes by which contact insecticides penetrate the insect are poorly understood and the rationale behind the differential rate of penetration of insecticides in different insecticidal formulations is still mostly empirically based. This is largely due to the great complexity and variability of insect cuticles. The basis for the improved penetration by the synergised pyrethroid insecticides in US Patent 4,595,679 was attributed to the amphiphilic solvency properties of the 2-pyrollidones acting as carriers for the insecticide.

It has now been found that the activity of knockdown pesticides is enhanced by formulating these with certain solvents, specifically 'ethyl toluenes' and 'trimethylbenzenes'. By the term 'ethyl toluene' are included the following isomers, 2-ethyltoluene (1-methyl-2-ethylbenzene), 3-ethyltoluene (1-methyl-3-ethylbenzene), 4-ethyltoluene (1-methyl-4-ethylbenzene) or mixtures thereof. By the term 'trimethylbenzene' are included the following isomers, 1,2,3-trimethylbenzene, 1,2,4-trimethylbenzene and 1,3,5-trimethylbenzene or mixtures thereof. The ethyl toluenes and trimethylbenzenes are non-polar solvents which do not share the amphiphilic properties of the 2-pyrollidones.

Accordingly, the present invention provides a pesticidal composition of a knockdown pesticide in a solvent carrier which comprises ethyl toluene or trimethylbenzene.

It is often convenient to include more than one knockdown pesticide in the compositions of the present invention. Suitable knockdown pesticides are to be found in the organophosphorus, carbamate, pyrethrin and synthetic pyrethroid classes of insecticides.

Suitable organophosphorus insecticides include phosphoric or thiophosphoric esters such as: azamethiphos (S -6-chloro-2,3-dihydro-2-oxo-oxazolo[4,5-b ]pyridin-3-yl-methyl 0 ,0 -dimethyl phosphorothioate), chlorpyriphos (0 ,0 -diethyl 0 -3,5,6-trichloro-2-pyridyl phosphorothioate), diazinon (0 ,0 - diethyl 0 -2-isopropyl-6-methylpyrimidin-4-yl phosphorothioate), dichlorvos (2,2-dichlorovinyl dimethyl phosphate), and pirimiphosmethyl (0 -2-diethylamino-6-methylpyrimidin-4-yl 0 ,0 -dimethyl phosphorothioate) in particular azamethiphos.

Suitable carbamate esters include bendiocarb, carbaryl and dioxocarb, and suitable aryl methyl carbamates include propoxur (2-isopropoxyphenylmethylcarbamate).

Suitable knockdown pyrethroids include the allethrins, (such as bioallethrin, S-bioallethrin and esbiothrin) terallethrin, fenfluthrin, tetramethrin, kadethrin, and vapothrin. These pyrethroids cause hyperactivity and knockdown at sub-lethal doses often in a matter of minutes. Pyrethroids, such as permethrin, resmethrin, bioresmethrin, cypermethrin, cyhalothrin and deltamethrin at normal use levels do not cause such a rapid insect knockdown but exhibit good insecticidal activity. It is beneficial, particularly in the public health area, to combine knockdown and kill pesticides so that a rapid knockdown is readily observable with subsequent kill. In particular, the pyrethroid is selected from the allethrin series (most suitably bioallethrin, esbiothrin and S-bioallethrin) and tetramethrin.

In relation to the insecticidal compositions of the present invention, the knockdown insecticides are present in concentrations which vary depending on the insecticides in question but generally are from about 0.005% to 9% on a weight basis. Suitably the insecticides are present in an amount from 0.005% to 2%.

The ethyl toluenes or trimethylbenzenes are present in the pesticidal compositions of this invention in various amounts depending in part upon the knockdown pesticide used and the composition proposed. For insecticidal solutions, the ethyl toluenes or trimethylbenzenes are utilised in an amount from about 0.03% to 74% by weight suitably 0.03 to 40% by weight, preferably 0.05 to 10% by weight, and more preferably from 0.03 to 4% by weight.

Moreover, it has further been found that it is particularly convenient to supply ethyl toluenes or trimethylbenzenes in these compositions in admixture with other commercially available compatible solvents; in particular there are a number of commercially available solvent mixtures which contain ethyl toluenes and trimethylbenzenes, these include a number of petroleum based distillates sold under the trade names; "Aromasol" (ICI, PLC), "Solvesso" (Esso Standard Co.), "Shellsol" (Shell Oil Co.), "Tenneco" (Tenneco Oil Co.), and their equivalents. Particularly suitable solvents are "Aromasol H" and "Solvesso 100". The preferred solvent system is Aromasol H. Aromasol H is an aromatic naphtha comprising $C_8$, $C_9$ and $C_{10}$ alkylated benzenes, principally isomeric trimethylbenzenes (about 75% by weight) and other high boiling aromatic compounds including about 1.7-6% ethyl toluenes. Solvesso 100 contains about 45% trimethylbenzenes and 26% ethyl toluenes.

Where the ethyl toluene or trimethylbenzene in the compositions of the present invention are supplied as components of aromatic solvent mixtures, these mixtures are present in the composition from about 2 to 99% by weight. Suitably the ratio of pesticide to ethyl toluene is 1:0.08 to 1:1.4 and the ratio of pesticide to trimethylbenzene is 1:3 to 1:60.

Other compatible solvents or fluids well known in the pesticide formulation art can be optionally included in these compositions. Other optional components in the insecticidal compositions of the present invention include pesticide synergists, adjuvants, non-volatile solid diluents, liquified gases which can be used as propellants, dyestuffs, perfumes and stabilisers.

Pesticidal compositions according to the invention may be used to prepare pest baits and may also be used to prepare concentrates and filling solutions for sprays and in particular aerosols.

As will be apparent to one skilled in the art, various modifications of these compositions can be made within the scope of the above description. Such modifications are within the skills of a person practised in the art of pesticidal formulations and these modifications also form a part of the present invention.

In a further aspect of the invention aerosols can be prepared by conventionally diluting a concentrate to form a filling solution which is then added to an aerosol container to which a propellant is added. Suitably, the propellants include gases such as $CO_2$, dimethyl ether, chlorofluorocarbon and hydrocarbon propellants. Preferably the propellants are hydrocarbon propellants.

In a further aspect of the invention is provided a method of combating pests which comprises applying to said pests or the locus of said pests a pesticidally effective amount of the knockdown pesticidal composition of the present invention. Preferably, the compositions are applied directly to said pests or as a spray to combat crawling or flying pests.

Compositions according to the present invention are described in the following non-limiting examples.

3

All components are formulated by weight unless otherwise specified. In the following experiments the cockroach and the common housefly are used as 'model' pests.

## EXAMPLE 1

A range of different knockdown pesticides are applied at conventional concentration levels and the potentiation of these are compared when different levels of test solvents are included in a 'control' composition. The results are shown in Tables 1-4 as $KT_{50}$ and $KT_{95}$ values. $KT_{50}/KT_{95}$ is the time taken (in minutes or seconds) for 50%/95% of the insects to be knocked down. OPD is odourless petroleum distillate.

TABLE 1

| Results of Mean KT values (minutes) in Direct Spray Tests on Cockroaches | | | | | | |
|---|---|---|---|---|---|---|
| | | | Pesticides | | | |
| | | | 0.5% | 0.4% | 0.2% | 0.1% |
| Compositions | | | Azamethiphos | | Bioallethrin | Tetramethrin |
| | | | $KT_{50}$ | $KT_{95}$ | $KT_{50}$ | $KT_{50}$ |
| Acetone | 10% | | 6.8 | 9.4 | 3.5 | 5.0 |
| OPD | 90% | | | | | |
| Trimethyl benzene | 10% | | 6.7 | | | |
| Acetone | 10% | | | | | |
| OPD | 80% | | | | | |
| Ethyl toluene | 10% | | - | 7.8 | 2.8 | 2.2 |
| Acetone | 10% | | | | | |
| OPD | 80% | | | | | |
| Aromasol H | 10% | | 4.7 | 7.8 | 2.8 | 3.1 |
| Acetone | 10% | | | | | |
| OPD | 80% | | | | | |
| Solvesso 100 | 10% | | | 5.5 | | |
| Acetone | 10% | | | | | |
| OPD | 80% | | | | | |

TABLE 2

| Results of mean $KT_{50}$ values (minutes) in Spraybox Tests on Cockroaches | | | |
|---|---|---|---|
| | | Azamethiphos | |
| Compositions | | 0.2% | 0.1% |
| Acetone<br>* OPD<br>Butane | 20.0%<br>44.8/44.9%<br>35.0% | 5.39 | 5.86 |
| 1,2,4-trimethylbenzene<br>Acetone<br>* OPD<br>Butane | 32%<br>13.0%<br>19.8/19.9%<br>35.0% | 3.27 | 4.24 |
| Aromasol H<br>Acetone<br>* OPD<br>Butane | 32.0%<br>13.0%<br>19.8/19.9%<br>35.0% | 2.68 | 3.14 |

* For 0.2.0.1% Azamethiphos compositions respectively.

TABLE 3

| Mean $KT_{50}$ Results (minutes) of Direct Spray Tests on Cockroaches | |
|---|---|
| Formulation details: 0.4% Azamethiphos aerosol containing OPD, Acetone, Butane and varying amounts of Aromasol H | |
| % Composition Aromasol H | $KT_{50}$ |
| "Control" 0 | 8.5 |
| 10 | 3.6 |
| 15 | 2.4 |
| 20 | 3.3 |
| 32 | 2.3 |

TABLE 4

| Effect of various solvents on $KT_{50}$ activity of Bioallethrin using Topical Application on Flies | | | |
|---|---|---|---|
| | % Composition Bioallethrin | | |
| Solvents | 0.008% | 0.04% | 0.2% |
| Polyethyleneglycol 200 | >30 | 22 | 11 |
| N-methyl-2-pyrollidone | >30 | 7.6 | 6.4 |
| Mineral oil | >30 | >30 | 3.1 |
| Aromasol H | 10.9 | 4.1 | 1.2 |

TABLE 5

| Effect of various solvents on mean knockdown activity (in seconds) of Azamethiphos using Topical Application on Flies | | |
|---|---|---|
| Solvents | % Composition Azamethiphos | |
| | 0.4-2% | 0.8-3% |
| 100% Aromasol H | | 74.32 |
| 100% Butanone | 910.94 | 578.92 |
| 100% Ethyltoluene (mixed isomers) | | 72.28 |
| 100% 1,2,4-trimethylbenzene | | 74.80 |
| 100% Trimethylbenzene (mixed isomers) | | 84.39 |
| 100% Xylene (mixed isomers) | | 145.04 |
| 97% Butanone, 3% ethyltoluene (mixed isomers) | 674.09 | |
| 90% Butanone, 10% ethyltoluene (mixed isomers) | 514 | |
| 70% Butanone, 30% ethyltoluene (mixed isomers) | 348.27 | |
| 50% Butanone, 50% 2-ethyltoluene | 277.56 | |
| 50% Butanone, 50% 3-ethyltoluene | 340.09 | |
| 50% Butanone, 50% 4-ethyltoluene | 353.35 | |

Conclusions:

Ethyltoluenes have an enhancing effect on the knockdown activity of knockdown insecticides as shown in tests on cockroaches and flies.

Trimethylbenzenes have an enhancing effect on knockdown activity in fly tests but this is not seen in cockroach tests.

| EXAMPLE 2 | | | |
|---|---|---|---|
| | % Composition (w/w) | | |
| | Concentrate | Filling Solution | Aerosol |
| Azamethiphos | 1.23 | 0.615 | 0.4 |
| Aromasol H | 98.77 | 49.231 | 32.0 |
| Acetone | - | 20.00 | 13.0 |
| OPD | - | 30.154 | 19.6 |
| Butane/propane | - | - | 35.0 |
| | 100.00 | 100.00 | 100.00 |
| EXAMPLE 3 | | | |
| Azamethiphos | 9.00 | 0.615 | 0.4 |
| Aromasol H | 45.03 | 3.077 | 2.0 |
| Acetone | 45.97 | 30.769 | 20.0 |
| OPD | - | 65.539 | 42.6 |
| Butane/propane | - | - | 35.0 |
| | 100.00 | 100.00 | 100.00 |

| EXAMPLE 4 | |
|---|---|
| | Aerosol |
| Azamethiphos | 0.4 |
| Aromasol H | 5.0 |
| Acetone | 20.0 |
| OPD | 39.6 |
| Butane | 35.0 |
| | 100.00 |

## Claims

1. A pesticidal composition of a knockdown pesticide in a solvent carrier which comprises ethyl toluene or trimethylbenzene.

2. A pesticidal composition according to claim 1 wherein the ethyl toluene or trimethylbenzene is present in an amount from 0.03 to 74% by weight.

3. A pesticidal composition according to claim 1 wherein the ethyl toluene or trimethylbenzene is present in an amount from 0.03 to 40% by weight.

4. A pesticidal composition according to claim 1 wherein the proportion of ethyl toluene or trimethylbenzene present is from 0.05 to 10% by weight.

5. A pesticidal composition according to claim 1 wherein the proportion of ethyl toluene or trimethylbenzene present is from 0.03 to 4% by weight.

6. A pesticidal composition according to any of the preceding claims wherein the ethyl toluene or trimethylbenzene is supplied in a solvent mixture.

7. A pesticidal composition according to claim 6 wherein the solvent mixture is "Aromasol", "Solvesso", "Shellsol", Tenneco" or a mixture of these.

8. A pesticidal composition according to claim 6 wherein the solvent mixture is Aromasol H or Solvesso 100.

9. A pesticidal composition according to claims 6, 7 or 8 wherein the mixtures are present in a proportion from 2 to 99% by weight.

10. A pesticidal composition according to any of the preceding claims wherein the pesticide is present in an amount from 0.005% to 9%.

11. A pesticidal composition according to any of the preceding claims in the form of a bait, concentrate or filling solution for sprays or aerosols.

12. A pesticidal composition according to any of the preceding claims in the form of an aerosol.

13. A method of combating pests which comprises applying to said pests or the locus of said pests a pesticidally effective amount of a pesticidal composition according to any of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | DERWENT CENTRAL PATENTS INDEX, DOCUMENTATION ABSTRACTS JOURNAL, section C: AGDOC, week 9003, 14th March 1990, Derwent Publications Ltd, London, GB;<br>& JP-A-0 1 299 202 (SUMITOMO CHEM. IND. K.K.) 04-12-1989<br>* C02N-019275/03 * | 1-13 | A 01 N 25/02<br>A 01 N 25/06 |
| A | FR-A-2 462 101 (MONTEDISON S.p.A.)<br>* Page 2, lines 13-36; example 3; claims * | 1-3,6,7,9 | |
| A | EP-A-0 149 051 (BAYER AG)<br>* Page 7, lines 3-13; examples; claims 1,2 * | 1-3,6-10 | |

|  |  |
|---|---|
|  | TECHNICAL FIELDS SEARCHED (Int. Cl.5) |
|  | A 01 N |

The present search report has been drawn up for all claims

| Place of search | Date of completion of search | Examiner |
|---|---|---|
| The Hague | 08 January 91 | DONOVAN T.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document